# EUROPÄISCHE PATENTANMELDUNG

(11) **EP 4 521 067 A1**
(43) Veröffentlichungstag der Anmeldung: **12.03.2025**
(21) Anmeldenummer: 24194176.4
(22) Anmeldetag: 12.08.2024
(51) Int. Cl.: G01C 21/20, G06Q 50/08, G07C 5/08

(54) **SYSTEM UND VERFAHREN ZUM BESTIMMEN EINER RESTZEIT MITTELS EINES TACHOGRAPHEN EINES KRAFTFAHRZEUGES UND EINER DATENVERARBEITENDEN INFRASTRUKTUREINRICHTUNG**

(30) Priorität: 05.09.2023 DE 102023208546; 12.09.2023 DE 102023208821
(71) Anmelder: Continental Automotive Technologies GmbH, 30175 Hannover (DE)
(72) Erfinder: Warkentin, Egon, 30175 Hannover (DE); Knoepfle, Svenja, 30175 Hannover (DE)
(74) Vertreter: Continental Corporation

(57) **Zusammenfassung**

Die Erfindung bezieht sich auf ein System zum Bestimmen einer Restzeit, wobei das System ein einen Tachographen 2 aufweisendes Kraftfahrzeug 1 und eine datenverarbeitende Infrastruktureinrichtung 4 aufweist, wobei der Tachograph 2 einen GNSS-Empfänger aufweist und ausgebildet ist, aus mittels des GNSS-Empfängers empfangenen Satellitensignalen eine Eigenposition zu ermitteln. Für ein zuverlässiges Bestimmen einer Restzeit des Kraftfahrzeuges in einem Zielland bei einem grenzüberschreitenden Verkehr des Kraftfahrzeugs wird vorgeschlagen, dass der Tachograph 2 eine elektronische Landkarte 26 aufweist und ausgebildet ist, anhand eines Vergleichs der ermittelten Eigenposition mit Grenzdaten aus der Landkarte 26 einen Grenzübertritt zu ermitteln und den ermittelten Grenzübertritt an die Infrastruktureinrichtung 4 zu übermitteln, und dass die Infrastruktureinrichtung 4 ausgebildet ist, ausgehend von einem Grenzübertrittszeitpunkt des von dem Tachographen 2 übermittelten Grenzübertritts einen Zeitpunkt eines spätesten Grenz-Rückübertritts und/oder eine Zeitdauer bis zu einem spätesten Grenz-Rückübertritt zu ermitteln und den ermittelten Zeitpunkt und/oder die ermittelte Zeitdauer an den Tachographen 2 zu übermitteln. Außerdem bezieht sich die Erfindung auf ein Verfahren zum Bestimmen der Restzeit.

## Beschreibung

Die Erfindung bezieht sich auf ein System zum Bestimmen einer Restzeit, wobei das System ein einen Tachographen aufweisendes Kraftfahrzeug und eine datenverarbeitende Infrastruktureinrichtung aufweist, wobei der Tachograph einen GNSS-Empfänger aufweist und ausgebildet ist, aus mittels des GNSS-Empfängers empfangenen Satellitensignalen eine Eigenposition zu ermitteln. Darüber hinaus bezieht sich die Erfindung auf ein Verfahren zum Bestimmen einer Restzeit mittels eines Tachographen eines Kraftfahrzeugs und einer datenverarbeitenden Infrastruktureinrichtung.

In einem Tachographen, auch bezeichnet als Fahrtenschreiber oder Fahrtschreiber, werden unter anderem Fahrerfahrtdaten, wie zum Beispiel Lenk- und Ruhezeiten eines Fahrers des Kraftfahrzeuges, und auch fahrzeugbezogene Daten aufgrund gesetzlicher Vorschriften aufgezeichnet und gespeichert. Bei einem Führen des Kraftfahrzeugs ist grundsätzlich eine individuelle sogenannte Fahrerkarte des Fahrers in dem Tachographen angeordnet. Die Fahrerkarte ist eine als Chipkarte ausgebildete Datenkarte. Bekannt sind zudem Tachographen, die einen GNSS-Empfänger aufweisen. Mit einem solchen Tachographen ist es möglich, eine Position des Kraftfahrzeugs, in welches der Tachograph eingebaut ist, sowie damit auch des das Kraftfahrzeug führenden Fahrers mittels GNSS-Daten und Zeitstempeln zu bestimmen und zu speichern. Ein GNSS (Global Navigation Satellite System)-Empfänger ist ein Gerät, mittels welchem auf der Basis von empfangenen Satellitensignalen eine eigene Position, also die Eigenposition, bestimmt werden kann. Weiterhin ist es bekannt, Daten zwischen in einem Kraftfahrzeug angeordneten Tachographen und einem außerhalb des Kraftfahrzeugs angeordneten Zentralrechner auszutauschen.

Aufgabe der Erfindung ist es, ein System der eingangs genannten Art zu schaffen, welches ein zuverlässiges Bestimmen einer Restzeit des Kraftfahrzeugs und/oder eines Fahrers des Kraftfahrzeugs in einem Zielland bei einem grenzüberschreitenden Verkehr des Kraftfahrzeugs ermöglicht. Weiterhin ist es Aufgabe der Erfindung, ein Verfahren für ein zuverlässiges Bestimmen der Restzeit anzugeben.

Die erstgenannte Aufgabe wird erfindungsgemäß mit einem System der eingangs genannten Art und dadurch gelöst, dass der Tachograph eine elektronische Landkarte aufweist und ausgebildet ist, anhand eines Vergleichs der ermittelten Eigenposition mit Grenzdaten aus der Landkarte einen Grenzübertritt zu ermitteln und den ermittelten Grenzübertritt an die Infrastruktureinrichtung zu übermitteln, und dass die Infrastruktureinrichtung ausgebildet ist, ausgehend von einem Grenzübertrittszeitpunkt des von dem Tachographen übermittelten Grenzübertritts einen Zeitpunkt eines spätesten Grenz-Rückübertritts und/oder eine Zeitdauer bis zu einem spätesten Grenz-Rückübertritt zu ermitteln und den ermittelten Zeitpunkt und/oder die ermittelte Zeitdauer an den Tachographen zu übermitteln.

Dabei ist es auch denkbar, dass die Infrastruktureinrichtung ausgebildet ist, zusätzlich zu der Ausbildung zu dem Übermitteln des ermittelten Zeitpunkts und/oder der ermittelten Zeitdauer an den Tachographen, den ermittelten Zeitpunkt und/oder die ermittelte Zeitdauer auch an weitere datenverarbeitende und/oder datenanzeigende Einrichtungen oder Geräte zu übermitteln. Damit können zum Beispiel weiterführende Berechnungen bezüglich eines Fahrers des Kraftfahrzeugs und/oder des Kraftfahrzeugs selbst (zum Beispiel auch eines Zugfahrzeugs des Kraftfahrzeugs und/oder eines Anhängers des Kraftfahrzeugs, wenn das Kraftfahrzeug beispielsweise ein Zugfahrzeug und einen Anhänger aufweist) und/oder einer Fracht des Kraftfahrzeugs ermöglicht werden.

Vorteilhaft wird mit der Erfindung ein System zur Verfügung gestellt, welches den Fahrer des Kraftfahrzeugs von dem Erfordernis einer eigenen und selbstständigen Berechnung und Bestimmung der Restzeit entlastet. Damit trägt die Erfindung nicht nur zu einem Komfortgewinn für den Fahrer bei, sondern reduziert auch mögliche Fehlerquellen bei der Bestimmung der Restzeit und unterstützt so ein regelkonformes Verhalten sowohl des Fahrers als auch beispielsweise eines das Kraftfahrzeug einsetzenden Spediteurs. Auch können mit der Erfindung zusätzlich weitere logistische Prozesse und Abläufe optimiert werden. Bei dem Kraftfahrzeug handelt es sich insbesondere um ein Nutzfahrzeug, vorzugsweise einen Lastkraftwagen zur Beförderung von Gütern oder einen Omnibus zur Personenbeförderung. Die datenverarbeitende Infrastruktureinrichtung ist vorzugsweise immobil und kann, zum Beispiel, ein Zentralrechner oder ein Server oder allgemein ein sogenanntes Back-End sein. Dabei kann die Infrastruktureinrichtung beispielsweise auch über verschiedene Orte, zum Beispiel Server-Zentren, verteilt sein.

Die mit dem erfindungsgemäßen System zu bestimmende Restzeit kann insbesondere eine Restzeitdauer und/oder ein zukünftiger Zeitpunkt sein. So ist sie erfindungsgemäß ein Zeitpunkt eines spätesten Grenz-Rückübertritts oder eine Zeitdauer bis zu dem spätesten Grenz-Rückübertritt. Der späteste Grenz-Rückübertritt ist ein zum Beispiel aufgrund gesetzlicher Vorgaben oder beispielsweise aufgrund geschäftlicher Anweisung innerhalb einer das Kraftfahrzeug einsetzenden Spedition spätesterlaubter oder festgelegter Grenz-Rückübertritt und somit insbesondere vorgegeben. Als Basis zum Ermitteln des Zeitpunkts und/oder der Zeitdauer kann zum Beispiel eine erlaubte oder festgelegte Maximalverweildauer in dem Aufnahmestaat, das heißt in dem nach dem Grenzübertritt erreichten Staat, dienen.

Der Grenzübertritt wird dadurch ermittelt, dass der Tachograph einen Vergleich der ermittelten Eigenposition, welche die Eigenposition des Tachographen und somit auch des den Tachographen aufweisenden Kraftfahrzeugs und seines Fahrers ist, mit Grenzdaten, das heißt insbesondere Staatsgrenzen, angebenden Daten aus der elektronischen Landkarte, also elektronischen geographischen Karte, des Tachographen vornimmt. Da zudem grundsätzlich ein Erfordernis besteht, dass sich der Fahrer zum Führen des Kraftfahrzeugs bei dem Tachographen mittels seiner Fahrerkarte anmeldet, gibt der ermittelte Grenzübertritt nicht nur einen Grenzübertritt des Kraftfahrzeugs an, sondern zugleich auch einen entsprechenden Grenzübertritt des an dem Tachographen des Kraftfahrzeuges angemeldeten Fahrers. Die elektronische Landkarte ist insbesondere eine digitale Landkarte.

Die Erfindung ermöglicht es vorteilhaft, mit Hilfe der in den Tachographen integrierten Landkarte Grenzübertritte automatisch zu ermitteln. Zum Beispiel eine manuelle Eingabe eines Grenzübertritts in den Tachographen durch den Fahrer ist nicht mehr erforderlich. Gesetzliche oder unternehmerische Vorgaben, die beispielsweise eine Rückkehr eines Fahrers und/oder eines Kraftfahrzeugs in den Staat, in dem sich die Betriebsstätte des Kraftfahrzeugs und der Sitz oder eine Niederlassung eines Arbeitgebers des Fahrers befinden, erfordern, lassen sich mit der Erfindung vereinfacht einhalten und zudem erleichtert verwalten und gegebenenfalls kontrollieren.

Somit liefert die Erfindung ein einfaches und verlässliches System, mit dessen Hilfe eine rechtzeitige Rückkehr von Kraftfahrzeug und/oder Fahrer aus dem Aufnahmestaat, der allgemein auch als Zielland bezeichnet werden kann, erreicht und gegebenenfalls auch kontrolliert werden kann.

Vorteilhafte Weiterbildungen der Erfindung sind in den Unteransprüchen angegeben.

Gemäß einer vorteilhaften Weiterbildung der Erfindung ist die Infrastruktureinrichtung ausgebildet, bei Erreichen einer bestimmten, zum Beispiel minimalen, Restzeitspanne bis zu dem spätesten Grenz-Rückübertritt eine Grenz-Rückübertrittseinleitungsinformation an den Tachographen zu übermitteln. Damit schafft das System vorteilhaft eine Möglichkeit, angestoßen durch die Grenz-Rückübertrittseinleitungsinformation, rechtzeitig den Grenz-Rückübertritt vorzunehmen und so einen Konflikt durch eventuelles Überschreiten einer zulässigen Maximalverweildauer in dem Aufnahmestaat zu vermeiden. Die Restzeitspanne ist insbesondere vorgegeben. Sie kann von sich gegebenenfalls ändernden, fahrt- und/oder fahrerabhängigen Einflussgrößen wie zum Beispiel Verkehrssituation oder erforderliche Fahrerruhezeit beeinflusst sein.

Grundsätzlich ist es denkbar, den Zeitpunkt eines spätesten Grenz-Rückübertritts und/oder die Zeitdauer bis zu einem Grenz-Rückübertritt und gegebenenfalls die Grenz-Rückübertrittseinleitungsinformation in dem Tachographen beispielsweise lediglich zu speichern, um gegebenenfalls zu Kontroll- oder Informationszwecken ausgelesen werden zu können. Hingegen sieht eine vorteilhafte Weiterbildung der Erfindung vor, dass der Tachograph ein Anzeigemittel aufweist und derart ausgebildet ist, dass der von der Infrastruktureinrichtung übermittelte Zeitpunkt und/oder die übermittelte Zeitdauer und/oder die übermittelte Grenz-Rückübertrittseinleitungsinformation mittels des Anzeigemittels anzeigbar ist, vorzugsweise angezeigt wird. Damit kann in einfacher Weise eine verbesserte Unterstützung des Fahrers des Kraftfahrzeugs erfolgen, so dass der Fahrer nach dem Grenzübertritt seine Fahrt unter Vermeidung eines Überschreitens einer zulässigen Maximalverweildauer bis zu einem Grenz-Rückübertritt entsprechend planen und durchführen kann. Das Anzeigemittel des Tachographen kann zum Beispiel ein optisches Anzeigemittel und/oder ein akustisches Anzeigemittel sein.

Einer anderen vorteilhaften Weiterbildung der Erfindung gemäß weist das System zusätzlich ein mobiles Empfangs- und Anzeigegerät auf, und die Infrastruktureinrichtung ist ausgebildet, den Zeitpunkt und/oder die Zeitdauer und/oder die Grenz-Rückübertrittseinleitungsinformation an das mobile Empfangs- und Anzeigegerät zu übermitteln. Dadurch kann in einfacher Weise die Unterstützung, insbesondere für den Fahrer, zusätzlich verbessert werden. Das mobile Empfangs- und Anzeigegerät kann zum Beispiel ein Mobiltelefon, ein Smartphone oder ein Tablet-PC (tragbarer Computer mit berührungsempfindlichem Bildschirm) sein.

Grundsätzlich könnte man sich zum Beispiel vorstellen, dass die Infrastruktureinrichtung den Zeitpunkt, die Zeitdauer oder die Grenz-Rückübertrittseinleitungsinformation nur auf Anforderung des Tachographen oder des mobilen Geräts übermittelt. Eine vorteilhafte Weiterbildung der Erfindung sieht vor, dass die Infrastruktureinrichtung ausgebildet ist, den Zeitpunkt des spätesten Grenz-Rückübertritts und/oder die Zeitdauer bis zu dem spätesten Grenz-Rückübertritt und/oder die Grenz-Rückübertrittseinleitungsinformation in regelmäßigen Zeitabständen an den Tachographen und/oder an das mobile Empfangs- und Anzeigegerät zu übermitteln. Vorzugsweise können der Zeitpunkt und/oder die Zeitdauer und/oder die Grenz-Rückübertrittseinleitungsinformation jeweils dem aktuellen Zeitpunkt entsprechend aktualisiert sein. Ferner kann zusätzlich vorgesehen sein, dass der Zeitpunkt und/oder die Zeitdauer und/oder die Grenz-Rückübertrittseinleitungsinformation auch auf Anforderung des Tachographen oder des mobilen Geräts übermittelt werden.

Es ist zum Beispiel denkbar, dass der Tachograph eine Sendeeinrichtung zum Übermitteln des ermittelten Grenzübertritts an die Infrastruktureinrichtung und gegebenenfalls auch eine Empfangseinrichtung zum Empfangen von Angaben, welche von der Infrastruktureinrichtung übermittelt werden, wie Zeitpunkt, Zeitdauer und Grenz-Rückübertrittseinleitungsinformation, aufweist. Die Sendeeinrichtung und gegebenenfalls die Empfangseinrichtung könnten in einem solchen Fall beispielsweise innerhalb eines Gehäuses des Tachographen angeordnet sein. Eine vorteilhafte Weiterbildung der Erfindung sieht hingegen vor, dass das Kraftfahrzeug eine mit dem Tachographen verbundene, eine Sendeeinrichtung aufweisende Übertragungseinrichtung aufweist und dass die Übertragungseinrichtung ausgebildet ist, den ermittelten Grenzübertritt von dem Tachographen zu empfangen und mittels der, also ihrer, Sendeeinrichtung an die Infrastruktureinrichtung zu übermitteln. Damit wird ein flexibler Systemaufbau erreicht, und die Sendeeinrichtung kann vorteilhaft zum Beispiel auch von weiteren Vorrichtungen des Kraftfahrzeugs genutzt werden. Die Übertragungseinrichtung mit der Sendeeinrichtung kann zum Beispiel ein Transmitter sein.

Gemäß einer vorteilhaften Weiterbildung der Erfindung weist die Übertragungseinrichtung eine Empfangseinrichtung auf, und die Übertragungseinrichtung ist ausgebildet, den von der Infrastruktureinrichtung übermittelten Zeitpunkt und/oder die übermittelte Zeitdauer und/oder die übermittelte Grenz-Rückübertrittseinleitungsinformation mittels der, also ihrer, Empfangseinrichtung zur Weiterleitung an den Tachographen zu empfangen. Die Übertragungseinrichtung, welche die Sendeeinrichtung und die Empfangseinrichtung aufweist, kann zum Beispiel ein Transceiver sein.

Einer anderen vorteilhaften Weiterbildung der Erfindung entsprechend weist der Tachograph einen Datenspeicher auf und ist ausgebildet, den ermittelten Grenzübertritt und einen Grenz-Rückübertritt in dem Datenspeicher zu speichern. Der Datenspeicher kann insbesondere ein Datenspeicher einer in einer Chipkartenaufnahmevorrichtung, zum Beispiel einem Chipkartenschacht, des Tachographen angeordneten Chipkarte, insbesondere Fahrerkarte des Fahrers des Kraftfahrzeugs, sein. Damit kann vorteilhaft eine Zuordnung von Grenzübertrittsdaten und Grenz-Rückübertrittsdaten zu dem Fahrer des Kraftfahrzeugs erfolgen. Bei dem Grenz-Rückübertritt handelt es sich vorzugsweise um einen tatsächlichen Grenz-Rückübertritt. Alternativ oder zusätzlich zu dem Datenspeicher der Chipkarte kann der Datenspeicher des Tachographen beispielsweise auch ein fest in den Tachographen eingebauter, zum Beispiel auf einer Hauptplatine des Tachographen angeordneter, Datenspeicher sein. Das Speichern des ermittelten Grenzübertritts und des Grenz-Rückübertritts in den Datenspeicher erfolgt insbesondere zusammen mit den jeweiligen Zeitpunkten, nämlich dem Grenzübertrittszeitpunkt und dem Grenz-Rückübertrittszeitpunkt. Grundsätzlich korrespondiert der Grenz-Rückübertritt mit dem, zu einem früheren Zeitpunkt ermittelten, Grenzübertritt, das heißt der Grenz-Rückübertritt betrifft regelmäßig einen Übertritt über dieselbe Grenze, aber in entgegengesetzter Richtung und, natürlicherweise, zu einem späteren Zeitpunkt als der vorherige, ermittelte Grenzübertritt.

Die oben zweitgenannte Aufgabe wird erfindungsgemäß gelöst durch ein Verfahren zum Bestimmen einer Restzeit mittels eines Tachographen eines Kraftfahrzeuges und einer datenverarbeitenden Infrastruktureinrichtung, welches die folgenden Schritte umfasst:
- Festlegen von Positionsdaten des Kraftfahrzeugs;
- Erfassen eines Zeitpunkts eines Fahrtbeginns des Kraftfahrzeugs;
- Ermitteln einer Eigenposition des Tachographen mittels Satellitensignalen;
- Ermitteln eines Grenzübertritts über eine Grenze anhand eines Vergleichs der ermittelten Eigenposition mit Grenzdaten aus einer elektronischen Landkarte des Tachographen;
- Übermitteln des ermittelten Grenzübertritts an die Infrastruktureinrichtung,
- Ermitteln eines Zeitpunkts eines spätesten Grenz-Rückübertritts und/oder einer Zeitdauer bis zu einem spätesten Grenz-Rückübertritt durch die Infrastruktureinrichtung, ausgehend von einem Grenzübertrittszeitpunkt des von dem Tachographen übermittelten Grenzübertritts;
- Übermitteln des ermittelten Zeitpunkts und/oder der ermittelten Zeitdauer an den Tachographen.

Das Verfahren ist vorzugsweise ein Verfahren zum Betreiben eines oben beschriebenen Systems zum Bestimmen der Restzeit.

Die festgelegten Positionsdaten des Kraftfahrzeugs können beispielsweise Positionsdaten einer Betriebsstätte des Kraftfahrzeugs sein. Die Betriebsstätte des Kraftfahrzeugs liegt in einem ersten Staat. Allgemein bedeutet Staat im Zusammenhang der Erfindung beispielsweise Nationalstaat oder zum Beispiel Bundesstaat einer Föderation. Der Fahrtbeginn des Kraftfahrzeugs erfolgt an dessen Betriebsstätte, zum Beispiel einem Firmensitz eines das Kraftfahrzeug einsetzenden Speditionsunternehmens, oder an einem anderen Ort in dem ersten Staat, in dem sich die Betriebsstätte befindet. Der Fahrtbeginn kann grundsätzlich auch an einem Ort erfolgen, der sich in einem Staat befindet, welcher nicht derjenige Staat ist, in dem sich die Betriebsstätte des Kraftfahrzeugs befindet.

Insbesondere kontinuierlich oder zumindest vorzugsweise in regelmäßigen Zeitabständen erfolgt ein Ermitteln der Eigenposition des Tachographen und somit auch des den Tachographen aufweisenden Kraftfahrzeugs mittels Satellitensignalen. Ausgehend von dem Fahrtbeginn in dem ersten oder einem anderen Staat führt die Fahrt des Kraftfahrzeugs über eine Grenze in einen weiteren Staat, welcher als Aufnahmestaat oder Zielland bezeichnet werden kann. Die Grenze ist somit eine zwischenstaatliche Grenze zwischen insbesondere Hoheitsgebieten verschiedener Staaten. Der Grenzübertritt zwischen dem ersten Staat und dem weiteren Staat durch das Kraftfahrzeug wird anhand eines Vergleichs der ermittelten Eigenposition mit Grenzdaten aus einer elektronischen Landkarte des Tachographen ermittelt. Daraufhin wird der so ermittelte Grenzübertritt an die Infrastruktureinrichtung übermittelt. Bereits von dem Tachographen kann dem ermittelten Grenzübertritt ein Grenzübertrittszeitpunkt zugeordnet werden und an die Infrastruktureinrichtung zum Beispiel in Form eines Zeitstempels mit übermittelt werden. Der Tachograph weist vorzugsweise einen Zeitmesser auf, mittels dessen der Grenzübertrittszeitpunkt ermittelt werden kann. Auch können die insbesondere zur Ermittlung der Eigenposition von dem Tachographen empfangenen Satellitensignale eine Zeitinformation enthalten, mittels derer der Grenzübertrittszeitpunkt ermittelt werden kann. Ferner ist es denkbar, dass ausschließlich oder zusätzlich die Infrastruktureinrichtung dem übermittelten Grenzübertritt einen Grenzübertrittszeitpunkt zuordnet, wobei die Infrastruktureinrichtung zur Ermittlung des Grenzübertrittszeitpunkts beispielsweise ein in der Infrastruktureinrichtung verfügbares Zeitsignal verwendet. Das Zeitsignal kann beispielsweise von einem Zeitgeber der Infrastruktureinrichtung erzeugt sein.

Ausgehend von dem Grenzübertrittszeitpunkt ermittelt die Infrastruktureinrichtung, beispielsweise auf Basis einer zulässigen Maximalverweildauer in dem weiteren Staat, einen Zeitpunkt eines spätesten Grenz-Rückübertritts von dem weiteren Staat in den ersten oder allgemein vorhergehenden Staat und/oder eine Zeitdauer bis zu einem solchen spätesten Grenz-Rückübertritt. Von besonderer Bedeutung ist dabei regelmäßig der Grenz-Rückübertritt in den ersten Staat, das heißt den Staat des ursprünglichen Ausgangspunkts der Fahrt, insbesondere den Staat der Betriebsstätte, so dass zwischenzeitlich beispielsweise auch noch weitere Grenzübertritte des Kraftfahrzeugs in einen oder mehrere andere Staaten, allgemein Drittstaaten, erfolgen können. Der ermittelte Zeitpunkt für den spätesten Grenz-Rückübertritt und/oder die ermittelte Zeitdauer bis zu dem spätesten Grenz-Rückübertritt, insbesondere jeweils dem spätesten Grenz-Rückübertritt in den ersten Staat, das heißt den Staat des ursprünglichen Ausgangspunkts der Fahrt, insbesondere den Staat der Betriebsstätte des Kraftfahrzeugs, wird an den Tachographen übermittelt.

Gemäß einer vorteilhaften Weiterbildung der Erfindung erfolgt das Ermitteln des Zeitpunkts und/oder der Zeitdauer ausgehend von einer vorgegebenen Maximalverweildauer nach dem Grenzübertritt bis zu dem Grenz-Rückübertritt. Die vorgegebene Maximalverweildauer ist vorzugsweise in dem Tachographen und/oder der Infrastruktureinrichtung gespeichert.

Einer anderen vorteilhaften Weiterbildung der Erfindung gemäß erfolgt bei Erreichen einer bestimmten, zum Beispiel minimalen, Restzeitspanne bis zu dem spätesten Grenz-Rückübertritt ein Übermitteln einer Grenz-Rückübertrittseinleitungsinformation an den Tachographen. Die Restzeitspanne kann jeweils von sich ändernden Einflussfaktoren, wie zum Beispiel einer aktuellen Verkehrssituation oder einer Fahrerlenkzeit, wobei zum Beispiel von dem Fahrer noch verpflichtend einzuhaltende Pausen- und Ruhezeiten berücksichtigt werden können, beeinflusst sein.

Zu der Erfindung gehören auch Ausprägungen des erfindungsgemäßen Verfahrens zum Bestimmen einer Restzeit, die Merkmale aufweisend, wie sie bereits im Zusammenhang mit Ausprägungen des erfindungsgemäßen Systems zum Bestimmen einer Restzeit beschrieben worden sind und umgekehrt.

Aus diesem Grund sind die entsprechenden Ausprägungen des erfindungsgemäßen Verfahrens beziehungsweise des erfindungsgemäßen Systems nicht noch einmal beschrieben.

Die Erfindung umfasst auch die Kombination der Merkmale der beschriebenen Ausprägungen und Ausführungsformen.

Ausführungsbeispiele der Erfindung werden im Folgenden anhand der skizzenhaften und schematischen Darstellungen in der Zeichnung näher beschrieben.

Es zeigen:
- Fig. 1: in einer Funktionsumgebung eine Ausführungsform eines Systems zum Bestimmen einer Restzeit und
- Fig. 2: einen Ausschnitt einer weiteren Ausführungsform eines Systems zum Bestimmen einer Restzeit.

Sich entsprechende Elemente sind in allen Figuren mit gleichen Bezugszeichen versehen. Die einzelnen Figuren zeigen und verdeutlichen jeweils einzelne Merkmale von Ausführungsbeispielen der Erfindung und zeigen somit nicht zwingend jeweils die Erfindung in einer Gesamtheit mit allen Merkmalen.

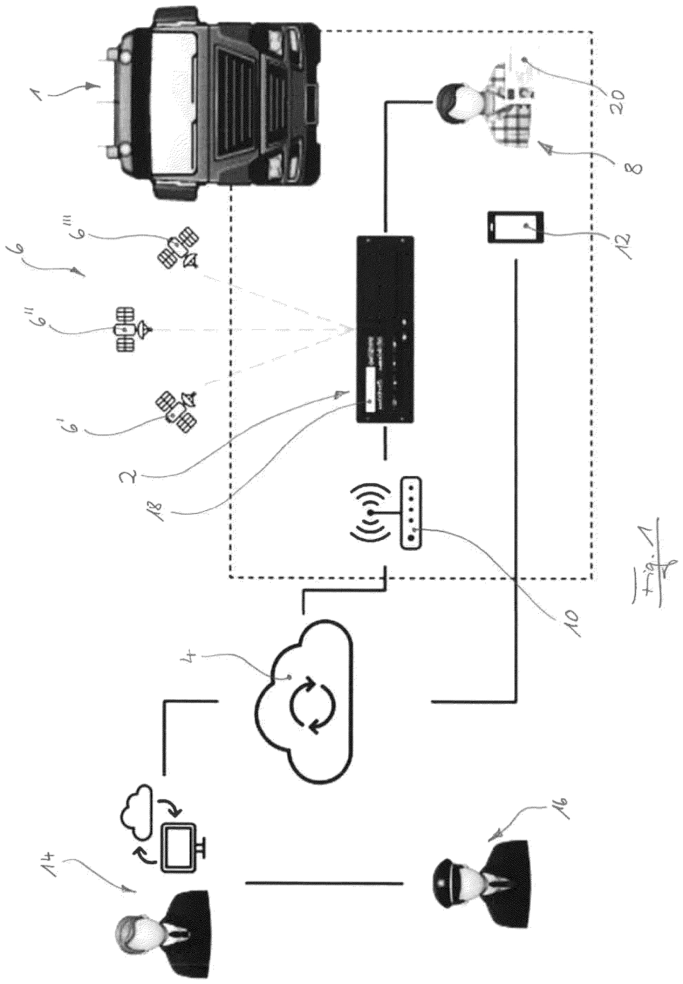

Figur 1 zeigt ein System zum Bestimmen einer Restzeit, wobei das System eine datenverarbeitende Infrastruktureinrichtung 4 und ein Kraftfahrzeug 1 mit einem Tachographen 2 aufweist. Der Tachograph 2 ist in diesem Ausführungsbeispiel fest in das Kraftfahrzeug 1 eingebaut. Die datenverarbeitende Infrastruktureinrichtung 4 ist hier nur symbolhaft dargestellt und kann zum Beispiel ein Zentralrechner, ein Server, ein Back-End oder ein Server-Netzwerk sein. Der Tachograph 2 weist einen GNSS-Empfänger auf. Mittels des GNSS-Empfängers können Satellitensignale von Satelliten 6', 6", 6‴ eines Satellitensystems 6 empfangen werden. Das Satellitensystem 6 ist ein globales Navigationssatellitensystem (GNSS) wie zum Beispiel GPS, Galileo, Beidou oder GLONASS. Der Tachograph 2 ist ausgebildet, aus den empfangenen Satellitensignalen eine Eigenposition des Tachographen 2 und somit auch des Kraftfahrzeugs 1 zu ermitteln.

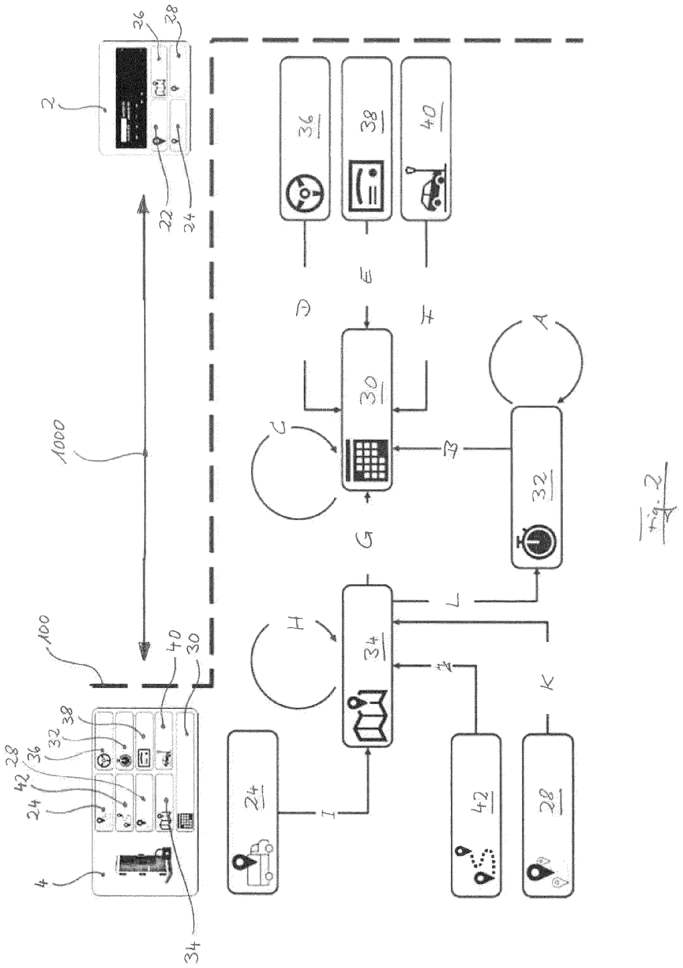

Der Tachograph 2 weist eine elektronische Landkarte 26 (siehe Figur 2), das heißt eine elektronische geographische Karte, auf und ist ausgebildet, anhand eines Vergleichs der aus den empfangenen Satellitensignalen ermittelten Eigenposition mit Grenzdaten, das heißt insbesondere Staatsgrenzen angebenden Daten, aus der elektronischen Landkarte einen Grenzübertritt des Tachographen 2 und somit auch des Kraftfahrzeugs 1 sowie eines das Kraftfahrzeug 1 führenden Fahrers 8 zu ermitteln. Der von dem Tachographen 2 ermittelte Grenzübertritt wird an die Infrastruktureinrichtung 4 übermittelt. Hierzu ist eine ebenfalls in dem Kraftfahrzeug 1 angeordnete Übertragungseinrichtung 10, die mit dem Tachographen 2 verbunden ist, vorgesehen. Die Übertragungseinrichtung 10 ist zum Beispiel ein Transmitter oder ein Transceiver.

Die Infrastruktureinrichtung 4 ist ausgebildet, ausgehend von einem Grenzübertrittszeitpunkt, das heißt dem Zeitpunkt, zu dem der ermittelte Grenzübertritt erfolgt ist, einen Zeitpunkt eines spätesten Grenz-Rückübertritts zu ermitteln. Außerdem ist die Infrastruktureinrichtung 4 ausgebildet, ausgehend von dem Grenzübertrittszeitpunkt eine Zeitdauer bis zu dem spätesten Grenz-Rückübertritt zu ermitteln.

Das Ermitteln des Zeitpunkts des spätesten Grenz-Rückübertritts und der Zeitdauer bis zu dem spätesten Grenz-Rückübertritt erfolgt beispielsweise ausgehend von einer zulässigen Maximalverweildauer in dem Staat, in welchen hinein der Grenzübertritt stattgefunden hat, beispielsweise bezeichnet als Aufnahmestaat. Der von der Infrastruktureinrichtung 4 ermittelte Zeitpunkt und die von der Infrastruktureinrichtung 4 ermittelte Zeitdauer werden von der Infrastruktureinrichtung 4 an den Tachographen 2 übermittelt. Auf der Seite des Tachographen 2 werden der Zeitpunkt und die Zeitdauer von der Übertragungseinrichtung 10 empfangen und an den Tachographen 2 weitergeleitet.

Das System weist zusätzlich ein mobiles Empfangs- und Anzeigegerät 12 auf, das in diesem Ausführungsbeispiel als Smartphone ausgebildet ist. Auch an das mobile Empfangs- und Anzeigegerät 12 werden der von der Infrastruktureinrichtung 4 ermittelte Zeitpunkt und die von der Infrastruktureinrichtung 4 ermittelte Zeitdauer übermittelt. Dieses kann beispielsweise über ein Mobilfunknetz erfolgen.

In dem hier gezeigten Ausführungsbeispiel ist vorgesehen, dass ein Verkehrsunternehmer 14, zum Beispiel eine das Kraftfahrzeug 1 einsetzende Spedition, einen Zugang zu der Infrastruktureinrichtung 4 hat und auf die von der Infrastruktureinrichtung 4 ermittelten Angaben Zeitpunkt und Zeitdauer zugreifen kann. Eine Kontrollinstanz 16, zum Beispiel eine Kontrollbehörde, kann zu Kontrollzwecken entweder direkt auf die Infrastruktureinrichtung 4 zugreifen, oder ein solches Zugreifen kann über den Zugang des Verkehrsunternehmers 14 erfolgen.

Der Tachograph 2 weist ein als Display ausgebildetes optisches Anzeigemittel 18 auf. Mittels des Anzeigemittels 18 kann der von der Infrastruktureinrichtung 4 ermittelte und an den Tachographen 2 übermittelte Zeitpunkt sowie die entsprechend ermittelte und übermittelte Zeitdauer angezeigt werden. Gleiches gilt für eine von der Infrastruktureinrichtung 4 bei Erreichen einer bestimmten Restzeitspanne bis zu dem spätesten Grenz-Rückübertritt an den Tachographen 2 übermittelte Grenz-Rückübertrittseinleitungsinformation, die es dem Fahrer 8 erleichtert, rechtzeitig die Grenze für einen Grenz-Rückübertritt zu erreichen.

Der Tachograph 2 weist ferner einen Chipkartenschacht auf, in dem eine individualisierte, insbesondere personalisierte, Chipkarte 20, hier eine sogenannte Fahrerkarte des Fahrers 8, angeordnet ist. Die Chipkarte 20 weist einen Datenspeicher auf. Der ermittelte Grenzübertritt und der tatsächliche Grenz-Rückübertritt über die Grenze werden zusammen mit dem Zeitpunkt des Grenzübertritts, mithin dem Grenzübertrittszeitpunkt, sowie dem Zeitpunkt des Grenz-Rückübertritts, mithin dem Grenz-Rückübertrittszeitpunkt, in dem Datenspeicher der Chipkarte 20 gespeichert. Alternativ oder zusätzlich können die entsprechenden Angaben in einem fest in den Tachographen 2 eingebauten Datenspeicher gespeichert werden. Auch können die genannten Angaben in der Infrastruktureinrichtung 4 gespeichert sein.

Figur 2 zeigt einen Ausschnitt einer weiteren Ausführungsform eines Systems zum Bestimmen einer Restzeit. Eine gestrichelte Linie 100 in Figur 2 trennt symbolisch einen beweglichen Teil des Systems, welcher Teil ein (hier nicht dargestelltes) Kraftfahrzeug mit einem Tachographen 2 aufweist, von einem unbeweglichen, immobilen Teil des Systems, welcher Teil eine als Back-End ausgebildete datenverarbeitende Infrastruktureinrichtung 4 aufweist. In einem unteren Bereich von Figur 2 sind zudem Schritte eines Verfahrens zum Bestimmen der Restzeit veranschaulicht.

Der Tachograph 2 weist einen GNSS-Empfänger 22 zum Ermitteln einer Eigenposition des Tachographen 2 und somit einer Fahrzeugposition 24 des Kraftfahrzeugs 1 (siehe Figur 1) aus mittels des GNSS-Empfängers 22 empfangenen Satellitensignalen auf. Zudem weist der Tachograph 2 eine elektronische Landkarte 26 auf. Anhand eines Vergleichs der ermittelten Eigenposition mit Grenzdaten aus der Landkarte 26 ermittelt der Tachograph 2 einen Grenzübertritt 28.

Die datenverarbeitende Infrastruktureinrichtung 4 weist einen Fristenrechner 30 und einen Zeitgeber 32 auf. Weiterhin weist in diesem Ausführungsbeispiel auch die Infrastruktureinrichtung 4 eine eigene elektronische Landkarte 34 auf. Darüber hinaus umfasst die Infrastruktureinrichtung 4 Angaben zu von dem Tachographen 2 ermittelten und an die Infrastruktureinrichtung 4 übermittelten Grenzübertritten 28. Ferner umfasst die Infrastruktureinrichtung 4 Angaben zu einer von dem Tachographen 2 übermittelten Fahrzeugposition 24 des Kraftfahrzeugs 1 sowie zu von dem Tachographen 2 übermittelten Arbeitszeiten 36 des Fahrers 8 des Kraftfahrzeugs 1.

Ferner liegen der Infrastruktureinrichtung 4 eine den Zeitpunkt einer Entsendung des Fahrers 8 des Kraftfahrzeugs 1 angebende Deklaration 38 sowie Informationen über das Verkehrsumfeld 40 des Kraftfahrzeugs 1 vor. Angaben zu einer Fahrzeugroute 42 des Kraftfahrzeugs 1 werden entweder von dem Tachographen 2 an die Infrastruktureinrichtung 4 übermittelt, oder die Infrastruktureinrichtung 4 selbst ermittelt anhand der Fahrzeugposition 24 und mit Hilfe der elektronischen Landkarte 34 der Infrastruktureinrichtung 4 solche Angaben zu der Fahrzeugroute 42 des Kraftfahrzeugs 1.

Mittels des Zeitgebers 32 und des Fristenrechners 30 ermittelt die Infrastruktureinrichtung 4 ausgehend von dem Grenzübertrittszeitpunkt des von dem Tachographen 2 übermittelten Grenzübertritts 28 einen Zeitpunkt eines spätesten zulässigen Grenz-Rückübertritts und/oder eine Zeitdauer bis zu dem spätesten zulässigen Grenz-Rückübertritt. Dieser Zeitpunkt und/oder diese Zeitdauer werden von der Infrastruktureinrichtung 4 an den Tachographen 2 übermittelt. Somit werden, in Figur 2 symbolisiert durch einen Doppelpfeil 1000, sowohl Informationen (zum Beispiel der Grenzübertritt) von dem Tachographen 2 an die Infrastruktureinrichtung 4 als auch Informationen (zum Beispiel der Zeitpunkt des spätesten Grenz-Rückübertritts und/oder die Zeitdauer bis zum spätesten Grenz-Rückübertritt) in umgekehrter Richtung von der Infrastruktureinrichtung 4 an den Tachographen 2 übermittelt. Die Übermittlung kann jeweils unmittelbar ereignisbezogen, beispielsweise bei Grenzübertritt, und/oder wiederkehrend, zum Beispiel jeweils erneut nach Ablauf einer bestimmten Zeitspanne, die beispielsweise eine Dauer von drei Stunden aufweisen kann, erfolgen.

Der eine grundsätzlich, das heißt beispielsweise maximal (zum Beispiel auf Basis einer zulässigen Maximalverweildauer in dem Aufnahmestaat nach dem Grenzübertritt), bis zu dem Grenz-Rückübertritt verbleibende Zeitspanne berechnende (A) Zeitgeber 32 beeinflusst (B) den Fristenrechner 30, welcher allgemein die Fahrt des Kraftfahrzeugs betreffende Fristen und speziell die Restzeit, und zwar den Zeitpunkt des spätesten (zulässigen) Grenz-Rückübertritts beziehungsweise die Zeitdauer bis zu dem spätesten (zulässigen) Grenz-Rückübertritt, berechnet (C). Beeinflusst werden kann der Fristenrechner 30 dabei ferner von Angaben zu den Arbeitszeiten 36 (D), zu der Deklaration 38 (E), zu dem Verkehrsumfeld 40 (F) sowie von der Landkarte 34 (G). Mittels der Landkarte 34 können Entfernungen und Fahrtrichtung des Kraftfahrzeugs 1 bestimmt (H) werden. Einflüsse aus Fahrzeugposition 24 (I), Fahrzeugroute 42 (J) und Grenzübertritt 28 (K) fließen in die elektronische, insbesondere digitale, Landkarte 34 ein. Nach dem Grenzübertritt 28 löst (L) die Landkarte 34 den Zeitgeber 32 zur Berechnung (A) der grundsätzlich verbleibenden Zeitspanne (siehe oben) aus.

Insgesamt wird in den Ausführungsbeispielen gezeigt, wie ein System und ein Verfahren zum Bestimmen einer insbesondere regelkonformen Restzeit eines Kraftfahrzeugs und eines Fahrers des Kraftfahrzeugs in einem Aufnahmestaat nach einem Grenzübertritt unter Verwendung eines Tachographen des Kraftfahrzeugs und einer datenverarbeitenden Infrastruktureinrichtung ausgebildet sein können.

Mithilfe einer kalkulatorischen Unterstützung in Form eines oder mehrerer Hinweise an einen betroffenen Nutzer (den Fahrer und, im Falle des Kraftfahrzeugs, den Verkehrsunternehmer) können Hinweise zu der Restzeit bis zu einem spätest zulässigen, das heißt spätest (noch) erlaubten, Grenz-Rückübertritt kommuniziert werden. Die Kalkulation der jeweiligen Fristen (Restzeiten) kann beispielsweise anhand folgender Parameter berechnet werden: Positionsangaben zu dem Standort der Niederlassung oder Betriebstätte, Zeitpunkt und Position des Grenzübertritts und gegebenenfalls der mehreren Grenzübertritte, Zeitpunkt der Entsendung gemäß einer Deklaration, aktuelle Position des Kraftfahrzeugs, Standort bei Beginn sowie Ende der täglichen Arbeit des Fahrers.

Die Berechnung und Darstellung der vorgegebenen Fristen kann beispielsweise unter nachfolgenden Aspekten erfolgen: Festlegung der Niederlassung oder Betriebstätte für den Fahrer oder das Fahrzeug anhand der entsprechenden Positionsdaten, diese können gegebenenfalls in dem Tachographen für das Kraftfahrzeug oder auf der Fahrerkarte für den Fahrer hinterlegt werden; fortwährende Überprüfung der Grenzübertritte in einen Staat, der von dem Staat der Niederlassung oder Betriebstätte abweicht, mittels der integrierten geographischen Karte im Tachographen und der aktuellen Position (Eigenposition) des Fahrzeuges; Übertragung der Änderungen über einen Transmitter an die datenverarbeitende Infrastruktureinrichtung unter Zuhilfenahme geeigneter Dienste, zum Beispiel Mobilfunkdienste (Änderungen können beispielsweise sein: Start einer Fahrt und Ende einer Fahrt in einem Staat, aktuelle Position des Fahrzeuges, erkannter und im Tachographen gespeicherter Grenzübertritt); der erkannte, das heißt ermittelte, Grenzübertritt kann mit dem Zeitpunkt der Entsendung verglichen und als Nachweis (in dem Tachographen und gegebenenfalls in der datenverarbeitenden Infrastruktureinrichtung) gespeichert werden; nach einem erkannten Grenzübertritt wird der voraussichtliche Zeitpunkt für die Rückkehr berechnet und an die Nutzer (Fahrer und Verkehrsunternehmer) kommuniziert und gegebenenfalls angezeigt; die aktuelle Position des Fahrzeugs und Fahrers kann in Bezug auf die Entfernung zu der Niederlassung oder Betriebsstätte überprüft und mit der Rückkehrfrist verglichen werden, um gegebenenfalls einen Hinweis für eine Rückreise bezogen auf den Zeitbedarf und die Entfernung visuell und/oder akustisch darzustellen; weitere historische Daten, das heißt vorhergehend bereits erfasste und aufgezeichnete Daten, oder Echtzeitdaten können für weitere Optimierungen einbezogen werden; die Rückkehr kann mittels der im Tachographen gespeicherten Standorte zuverlässig und nachweissicher hinterlegt werden; die Standorte können beispielsweise mittels der Positionsdaten, die im Zusammenhang mit der Fahrt gespeichert werden, verifiziert und für Kontrollzwecke bereitgestellt werden und an die Nutzer des Systems beispielsweise über die datenverarbeitende Infrastruktureinrichtung und ein mobiles Empfangs- und Anzeigegerät, zum Beispiel ein Smartphone, kommuniziert und angezeigt werden.

Insgesamt erleichtert die Erfindung die Befolgung gesetzlicher Vorgaben mithilfe des Tachographen und einer datenverarbeitenden Infrastruktureinrichtung. Damit reduziert die Erfindung auch zum Beispiel Risiken für Verkehrsunternehmer, wegen unabsichtlicher Fehler Sanktionen seitens Kontrollorganen zu erfahren. Zudem trägt die Erfindung durch eine Automatisierung von Routinearbeiten zu einer Steigerung der Effektivität sowie einer Optimierung der Planungssicherheit bei der Entsendung von Fahrern und Fahrzeugen bei.

## Patentansprüche

1. System zum Bestimmen einer Restzeit, wobei das System ein einen Tachographen (2) aufweisendes Kraftfahrzeug (1) und eine datenverarbeitende Infrastruktureinrichtung (4) aufweist, wobei der Tachograph (2) einen GNSS-Empfänger (22) aufweist und ausgebildet ist, aus mittels des GNSS-Empfängers (22) empfangenen Satellitensignalen eine Eigenposition zu ermitteln, **dadurch gekennzeichnet,**
- **dass** der Tachograph (2) eine elektronische Landkarte (26) aufweist und ausgebildet ist, anhand eines Vergleichs der ermittelten Eigenposition mit Grenzdaten aus der Landkarte (26) einen Grenzübertritt zu ermitteln und den ermittelten Grenzübertritt an die Infrastruktureinrichtung (4) zu übermitteln,
- und **dass** die Infrastruktureinrichtung (4) ausgebildet ist, ausgehend von einem Grenzübertrittszeitpunkt des von dem Tachographen (2) übermittelten Grenzübertritts einen Zeitpunkt eines spätesten Grenz-Rückübertritts und/oder eine Zeitdauer bis zu einem spätesten Grenz-Rückübertritt zu ermitteln und den ermittelten Zeitpunkt und/oder die ermittelte Zeitdauer an den Tachographen (2) zu übermitteln.

2. System nach Anspruch 1, **dadurch gekennzeichnet, dass** die Infrastruktureinrichtung (4) ausgebildet ist, bei Erreichen einer bestimmten Restzeitspanne bis zu dem spätesten Grenz-Rückübertritt eine Grenz-Rückübertrittseinleitungsinformation an den Tachographen (2) zu übermitteln.

3. System nach Anspruch 1 oder 2, **dadurch gekennzeichnet, dass** der Tachograph (2) ein Anzeigemittel (18) aufweist und derart ausgebildet ist, dass der von der Infrastruktureinrichtung (4) übermittelte Zeitpunkt und/oder die übermittelte Zeitdauer und/oder die übermittelte Grenz-Rückübertrittseinleitungsinformation mittels des Anzeigemittels (18) anzeigbar ist.

4. System nach einem der vorhergehenden Ansprüche, **dadurch gekennzeichnet, dass** das System zusätzlich ein mobiles Empfangs- und Anzeigegerät (12) aufweist und dass die Infrastruktureinrichtung (4) ausgebildet ist, den Zeitpunkt und/oder die Zeitdauer und/oder die Grenz-Rückübertrittseinleitungsinformation an das mobile Empfangs- und Anzeigegerät (12) zu übermitteln.

5. System nach einem der vorhergehenden Ansprüche, **dadurch gekennzeichnet, dass** die Infrastruktureinrichtung (4) ausgebildet ist, den Zeitpunkt des spätesten Grenz-Rückübertritts und/oder die Zeitdauer bis zu dem spätesten Grenz-Rückübertritt und/oder die Grenz-Rückübertrittseinleitungsinformation in regelmäßigen Zeitabständen an den Tachographen (2) und/oder an das mobile Empfangs- und Anzeigegerät (12) zu übermitteln.

6. System nach einem der vorhergehenden Ansprüche, **dadurch gekennzeichnet, dass** das Kraftfahrzeug (1) eine mit dem Tachographen (2) verbundene, eine Sendeeinrichtung aufweisende Übertragungseinrichtung (10) aufweist und dass die Übertragungseinrichtung (10) ausgebildet ist, den ermittelten Grenzübertritt von dem Tachographen (2) zu empfangen und mittels der Sendeeinrichtung an die Infrastruktureinrichtung (4) zu übermitteln.

7. System nach Anspruch 6, **dadurch gekennzeichnet, dass** die Übertragungseinrichtung (10) eine Empfangseinrichtung aufweist und dass die Übertragungseinrichtung (10) ausgebildet ist, den von der Infrastruktureinrichtung (4) übermittelten Zeitpunkt und/oder die übermittelte Zeitdauer und/oder die übermittelte Grenz-Rückübertrittseinleitungsinformation mittels der Empfangseinrichtung zur Weiterleitung an den Tachographen (2) zu empfangen.

8. System nach einem der vorhergehenden Ansprüche, **dadurch gekennzeichnet, dass** der Tachograph (2) einen Datenspeicher aufweist und ausgebildet ist, den ermittelten Grenzübertritt und einen Grenz-Rückübertritt in dem Datenspeicher zu speichern.

9. Verfahren zum Bestimmen einer Restzeit mittels eines Tachographen (2) eines Kraftfahrzeugs (1) und einer datenverarbeitenden Infrastruktureinrichtung (4), insbesondere Verfahren zum Betreiben eines Systems nach einem der vorhergehenden Ansprüche, wobei das Verfahren die folgenden Schritte aufweist:
- Festlegen von Positionsdaten des Kraftfahrzeugs (1),
- Erfassen eines Zeitpunkts eines Fahrtbeginns des Kraftfahrzeugs (1),
- Ermitteln einer Eigenposition des Tachographen (2) mittels Satellitensignalen,
- Ermitteln eines Grenzübertritts über eine Grenze anhand eines Vergleichs der ermittelten Eigenposition mit Grenzdaten aus einer elektronischen Landkarte (26) des Tachographen (2),
- Übermitteln des ermittelten Grenzübertritts an die Infrastruktureinrichtung (4),
- Ermitteln eines Zeitpunkts eines spätesten Grenz-Rückübertritts und/oder einer Zeitdauer bis zu einem spätesten Grenz-Rückübertritt durch die Infrastruktureinrichtung (4), ausgehend von einem Grenzübertrittszeitpunkt des von dem Tachographen (2) übermittelten Grenzübertritts,
- Übermitteln des ermittelten Zeitpunkts und/oder der ermittelten Zeitdauer an den Tachographen (2).

10. Verfahren nach Anspruch 9, **dadurch gekennzeichnet, dass** das Ermitteln des Zeitpunkts und/oder der Zeitdauer ausgehend von einer vorgegebenen Maximalverweildauer nach dem Grenzübertritt bis zu dem Grenz-Rückübertritt erfolgt.

11. Verfahren nach Anspruch 9 oder 10, **dadurch gekennzeichnet, dass** bei Erreichen einer bestimmten Restzeitspanne bis zu dem spätesten Grenz-Rückübertritt ein Übermitteln einer Grenz-Rückübertrittseinleitungsinformation an den Tachographen (2) erfolgt.
